# EUROPEAN PATENT APPLICATION

(11) **EP 1 544 243 A1**
(43) Date of publication of application: **22.06.2005**
(21) Application number: 04106469.2
(22) Date of filing: 10.12.2004
(51) Int. Cl.: C08L 21/00, C08L 19/00, C08K 5/103, B60C 1/00

(54) **Tire component, and tire with such component, of a rubber composition which contains a combination of soybean oil and starch/plasticizer composite**

(30) Priority: 18.12.2003 US 740275
(71) Applicant: THE GOODYEAR TIRE & RUBBER COMPANY, Akron, Ohio 44316-0001 (US)
(72) Inventor: Herberger, James Robert, Sr, Canal Fulton OH Ohio 44614 (US); Botts, Bina Patel, Cuyahoga Falls OH Ohio 44223 (US); Houser, Anthony James, Jr, Akron OH Ohio 44310 (US)
(74) Representative: Kutsch, Bernd

(57) **Abstract**

The invention relates to a tire component, and tire having such component, of a rubber composition which contains a combination of environmentally renewable, plant-derived, soybean oil and plant-derived starch. The starch is provided as a starch/plasticizer composite. Such tire component may be, for example, a tire tread, a tire sidewall and/or tire innerliner. A tire component such as tread may be used for retreading tires.

## Description

### Field of the Invention

The invention relates to a tire component, and tire having such component, of a rubber composition which contains a combination of environmentally renewable, plant-derived, soybean oil and plant-derived starch. The starch is provided as a starch/plasticizer composite. Such tire component may be, for example, a tire tread, a tire sidewall and/or tire innerliner. A tire component such as a tread may be used for retreading tires.

### Background of the Invention

Rubber compositions for tire components are sometimes prepared which contain rubber processing oils which are typically petroleum based oils such as, for example, paraffinic oils, naphthenic oils and aromatic oils which are usually a combination of such oils. The rubber processing oils are usually used to reduce the viscosity of relatively high viscosity unvulcanized rubber compositions so that they are more easily processable in conventional rubber processing equipment such as internal rubber mixers, open roll mixing, extrusion and calendar processing.

It is desired herein to provide such rubber composition for a tire component, particularly a tire component such as, for example, a tire tread, tire sidewall and/or innerliner with a combined replacement of such petroleum based oils with a plant-derived oil and a replacement of at least a portion of its carbon black reinforcement with a plant-derived reinforcement. In one aspect, it is contemplated that such tire component may be a tread which may be used for retreading tires.

Composites of plant-derived starch and suitable plasticizer, such as for example, a poly(ethylenevinyl alcohol) are sometimes used in rubber compositions for tire components, usually in conjunction with a reinforcing filler such as carbon black and/or amorphous silica such as precipitated silica.

Use of soybean oil in rubber compositions for use as tire components are described, for example, in US-A- 6,448,318 in which the soybean oil was reported as being composed of, or containing, 52 weight percent linoleic acid, 24 weight percent oleic acid, 8 weight percent linolenic acid and 4 weight percent stearic acid.

However, the combination of starch/plasticizer composite and soybean oil in a tire component rubber composition is considered herein to be novel and a departure from past practice.

In the description of this invention, the term "phr" where used refers to parts by weight of a material per 100 parts by weight of elastomer(s) contained in a rubber composition. The terms "elastomer" and "rubber" are used interchangeably, unless otherwise indicated. The terms "cure" and "vulcanize" are used interchangeably, unless otherwise indicated.

### Summary and Practice of the Invention

In accordance with this invention, a tire component according to claim 1 is disclosed.

Preferably, the carbon black and/or silica reinforcing filler comprises:
(1) 35 to 80 phr of rubber reinforcing carbon black, or
(2) 5 to 75 phr of rubber reinforcing carbon black and 5 to 75 phr of synthetic amorphous silica, preferably precipitated silica, or
(3) 35 to 80 phr of synthetic amorphous silica, preferably precipitated silica.

In practice, said tire component may be, for example, a tire tread, tire sidewall, tire innerliner, ply coat, wire coat, chafer, apex, sidewall insert and/or toe guard. For example, said tire component may be a tire tread, especially a tire tread used in the retreading of pneumatic rubber tires.

In further accordance with this invention, a tire is provided having at least one component comprised of said rubber composition. For example, said tire may have a tread comprised of said rubber composition.

In additional accordance with this invention, a pneumatic tire is provided with a retreaded carcass retreaded with a tire tread component of this invention.

A significant aspect of this invention is an observed benefit of using a combination of plant derived soybean oil and plant-derived starch in a diene-based rubber composition for a tire component in a sense of using renewable raw materials by replacing all or a significant portion of petroleum based rubber processing oil with soybean oil and by replacing a portion of silica and/or carbon black reinforcement with a starch/plasticizer composite.

Representative of diene-based elastomers are polymers and copolymers of at least one of isoprene and 1,3-butadiene monomers and copolymers of styrene with at least one of isoprene and 1,3-butadiene monomers.

Representative of such diene-based elastomers are, for example, cis 1,4-polyisoprene, cis 1,4-polybutadiene, trans 1,4-polybutadiene, styrene/butadiene polymers (organic solution polymerization derived and/or aqueous emulsion polymerization derived), vinyl polybutadiene having a vinyl content in a range of 30 to 90 percent, isoprene/butadiene polymers, styrene/isoprene polymers, styrene/isoprene/butadiene terpolymers, as well as tin or silicon coupled elastomers and as well as such elastomers modified with one or more of primary amines, secondary amines or heterocyclic amines, and as well as such elastomers modified by containing alkoxysilane groups.

Starch/plasticizer composites have been suggested for use in elastomer compositions for various purposes, including tires. For example, see US-A-5,672,639. Various other US patents, for example, 5,403,923; 5,374,671; 5,258,430 and 4,900,361 disclose preparation and use of various starch materials. Typically, starch may be composed of 25 percent amylose and 75 percent amylopectin, The Condensed Chemical Dictionary, Ninth Edition (1977)), revised by G.G. Hawley, published by Van Nostrand Reinhold Company, Page 813). Starch can be, reportedly, a reserve polysaccharide in plants such as, for example, corn, potatoes, rice and wheat as typical commercial sources.

Preferably said starch is comprised of amylose units and amylopectin units in a ratio of 15/85 to 35/65 and has a softening point according to ASTM No. D1228 in a range of 180°C to 220°C and where said starch/plasticizer composite has a softening point, reduced from said starch alone, in a range of 110°C to 170°C according to ASTM No. D1228 which is considered herein to be necessary or desirable to provide the starch/plasticizer composite softening point to approach of to be within the temperature region used for the mixing of the rubber composition itself.

For the starch/plasticizer composite, in general, starch to plasticizer weight ratio is in a range of 0.5/1 to 5/1, alternatively 1/1 to 5/1, so long as the starch/plasticizer composition has the required softening point range, and preferably, is capable of being a free flowing, dry powder or extruded pellets, before it is mixed with the elastomer(s).

For the purposes of this invention, the plasticizer effect for the starch/plasticizer composite, (meaning a softening point of the composite being lower than the softening point of the starch), can be obtained, for example, through use of a polymeric plasticizer such as, for example, poly(ethylenevinyl alcohol) with a softening point of less than 160°C. Other plasticizers, and their mixtures, may be used, provided that they have softening points of less than the softening point of the starch, and preferably less than 160°C, which might be, for example, one or more copolymers and hydrolyzed copolymers thereof selected from ethylene-vinyl acetate copolymers having a vinyl acetate molar content of from 5 to 90, alternatively 20 to 70, percent, ethylene-glycidal acrylate copolymers and ethylene-maleic anhydride copolymers. As hereinbefore stated, hydrolysed forms of copolymers are also contemplated.

Representative examples of synthetic plasticizers are, for example, poly(ethylenevinyl alcohol), cellulose acetate and diesters of dibasic organic acids, so long as they have a softening point sufficiently below the softening point of the starch with which they are being combined so that the starch/plasticizer composite has the required softening point range.

Preferably, the synthetic plasticizer is comprised of at least one of poly(ethylenevinyl alcohol) and cellulose acetate.

In practice, various coupling agents may be used to aid in coupling the starch/plasticizer composite, and amorphous, preferably precipitated, silica if used to the associated diene-based elastomer(s). Representative coupling agents are those used as coupling agents for precipitated silica. Representative of such coupling agents are, for example, although not intended to be limiting, are bis(3-trialkoxysilylalkyl) polysulfices, particularly bis(3-triethoxysilylpropyl) polysulfides having an average of from 2 to 4 connecting sulfur atoms in its polysulfidic bridge. Preferably, such coupling agent has only a minor average of only from 2 to 2.6 connecting sulfur atoms in its polysulfidic bridge where a reduced sulfur content is desired in the rubber composition, or a more liberal average of from 3.4 to 3.8 connecting sulfur atoms in its polysulfidic bridge.

Various synthetic, amorphous silicas may be used, preferably precipitated silicas. Such precipitated silicas include, for example, and not intended to be limiting, various HiSil™ silicas from PPG Industries, various Zeosil™ silicas from Rhodia, various VN™ silicas from Degussa and various Hubersil™ silicas from J.M. Huber.

It is readily understood by those having skill in the art that the rubber composition of the tread rubber would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The tires can be built, shaped, molded and cured by various methods which will be readily apparent to those having skill in such art.

The following Examples are provided to more fully describe the invention. The parts and percentages are by weight unless otherwise indicated.

### EXAMPLE

Rubber samples are prepared by blending various oils with a diene-based rubber composition and are referenced herein as Samples A through E, with Sample A being a Control Sample.

The Samples were composed of a blend of cis 1,4-polyisoprene natural rubber and styrene/butadiene rubber.

For Control Sample A, a petroleum based rubber processing oil was used for the rubber composition as well as carbon black reinforcement.

Samples B, C and E contained soybean oil replace the petroleum based processing oil (other than processing oil contained in the oil extended styrene/butadiene rubber).

Samples B, C and E also contained a starch/plasticizer composite to replace a portion of the carbon black.

For Samples B and C, both soybean oil and starch/plasticizer composite are added in one or more of the non-productive mixing stages.

Samples B and C differ only in that for Sample C, the starch/plasticizer composite is mixed in the second non-productive mixing stage instead of the first non-productive mixing stage.

Sample D is similar to Sample C except no starch/plasticizer is used.

Sample E is similar to Sample C except that no soybean oil is used.

For this Example, the first, non-productive mixing step (without sulfur curative) is conducted in an internal rubber mixer for 3 minutes to a temperature of 170°C. The sequentially subsequent second non-productive mixing step (also without the sulfur curative) is conducted in an internal rubber mixer for 2.5 minutes to a temperature of 165°C.

The sequentially subsequent productive mixing step (with the sulfur curative) is conducted in an internal rubber mixer for 1.5 minutes to a temperature of 116°C. The rubber composition is cooled to below 40°C between each of the non-productive mixing steps and between the second non-productive mixing step and the productive mixing step.

Ingredients for the Sample preparation are illustrated in the following Table 1.

**Table 1**

| Ingredients | Control Sample A | Sample B | Sample C | Sample D | Sample E |
|---|---|---|---|---|---|
| First Non-Productive Mixing | | | | | |
| Natural rubber¹ | 50 | 50 | 50 | 50 | 50 |
| E-SBR-1² | 0 | 30 | 30 | 30 | 30 |
| E-SBR-2, oil extended³ | 50 | 20 | 20 | 20 | 20 |
| Petroleum rubber extending oil^{3A} | 18.75 | 7.5 | 7.5 | 7.5 | 7.5 |
| Carbon black (N220)⁴ | 55 | 44 | 55 | 55 | 55 |
| Starch/plasticizer composite⁵ | 0 | 10 | 0 | 0 | 0 |
| Petroleum rubber processing oil⁶ | 2 | 0 | 0 | 0 | 11.5 |
| Soybean oil⁷ | 0 | 11.5 | 11.5 | 11.5 | 0 |
| Zinc oxide | 3 | 3 | 3 | 3 | 3 |
| Stearic acid | 2 | 2 | 2 | 2 | 2 |
| Microcrystalline wax | 2 | 2 | 2 | 2 | 2 |

| Second Non-Productive Mixing | | | | | |
|---|---|---|---|---|---|
| Carbon black (N220) | 10 | 11 | 0 | 10 | 0 |
| Starch/plasticizer composite⁵ | 0 | 0 | 10 | 0 | 10 |
| Petroleum rubber processing oil⁶ | 4 | 0 | 0 | 0 | 2 |
| Soybean oil⁷ | 0 | 2 | 2 | 2 | 0 |
| Coupling agent⁸ | 0 | 3 | 3 | 0 | 3 |
| Antidegradants | 3 | 3 | 3 | 3 | 3 |

| Productive Mixing | | | | | |
|---|---|---|---|---|---|
| Sulfur | 1.8 | 1.8 | 1.8 | 1.8 | 1.8 |
| Accelerator⁹ | 0.9 | 0.9 | 0.9 | 0.9 | 0.9 |
| Antioxidant | 1 | 1 | 1 | 1 | 1 |

| | | | | | |
|---|---|---|---|---|---|
| ¹Natural cis 1,4-polyisoprene rubber | | | | | |
| ²Aqueous emulsion polymerization prepared styrene/butadiene elastomer containing about 23.5 weight percent styrene obtained as Plioflex® 1502 from The Goodyear Tire & Rubber Company | | | | | |
| ³Aqueous emulsion polymerization prepared styrene/butadiene elastomer containing about 23.5 weight percent styrene obtained as Plioflex® 1712 from The Goodyear Tire & Rubber Company and reported in Table 1 which was composed of 37.5 phr of oil (the term "phr" for such purpose relates to, as is understood by the rubber industry, the parts of oil per 100 parts by weight of the styrene/butadiene elastomer itself) and the parts of elastomer reported in the Table 1 is reported as the dry weight of the elastomer without including the oil. | | | | | |
| ^{3A}Oil contained in the above Plioflex® 1712 rubber. | | | | | |
| ⁴N220 rubber reinforcing carbon black, an ASTM designation | | | | | |
| ⁵Composite of starch and poly(ethylene vinyl alcohol) plasticizer obtained as Mater-Bi 1128RR™ from the Novamont Company | | | | | |
| ⁶Rubber processing oil as 130A™ from the Valaro Company | | | | | |
| ⁷Soybean oil (food grade) from the Archer Daniels Midland Company | | | | | |
| ⁸Composite of a bis(3-triethoxysilylpropyl) polysulfide having an average in a range of from 2 to 2.6 connecting sulfur groups in its polysulfidic bridge and carbon black in a 50/50 weight ratio as Si266™ from the Degussa AG. | | | | | |
| ⁹Sulfenamide type | | | | | |

The following Table 2 illustrates cure behavior and various physical properties of the Samples. The aged Samples were cured Samples (160°C for 74 minutes) aged for 3 days in a hot air oven at 90°C.

**Table 2**

| | Control Sample | A Sample B | Sample C | Sample D | Sample E |
|---|---|---|---|---|---|
| Soybean oil | 0 | 13.5 | 13.5 | 13.5 | 0 |
| Starch/plasticizer composite | 0 | 10 | 10 | 0 | 10 |

| Stress-strain (ATS)¹ | | | | | |
|---|---|---|---|---|---|
| Ultimate tensile strength (MPa) | 17.2 | 17.0 | 15.6 | 16.4 | 15.3 |
| Ultimate elongation at break (%) | 581 | 613 | 597 | 590 | 524 |
| 300% ring modulus (MPa) | 6.7 | 6.4 | 6.0 | 6.2 | 7.5 |

| Aged stress-strain (ATS)¹ | | | | | |
|---|---|---|---|---|---|
| Ultimate tensile strength (MPa) | 14 | 14.3 | 12.1 | 12.5 | 13.0 |
| Ultimate elongation at break (%) | 478 | 501 | 449 | 468 | 394 |
| 300% ring modulus (MPa) | 8.2 | 8.3 | 8 | 7.6 | 10.4 |
| Shore A Hardness (23°C) | 65.6 | 65.3 | 63.7 | 63.9 | 67.1 |
| Aged Shore A Hardness (23°C) | 68 | 67 | 66 | 67 | 71 |
| Rebound (100°C) | 45.4 | 46.2 | 45.8 | 43.8 | 47.4 |
| Aged Rebound (100°C) | 44.4 | 45.6 | 44.5 | 40.8 | 46.6 |
| DIN abrasion, 10N, relative (%)² | 120 | 138 | 115 | 117 | 132 |
| Fabric backed tear strength (N)³ | 279 | 393 | 403 | 402 | 353 |
| Aged fabric backed tear strength (N) | 312 | 350 | 353 | 397 | 336 |
| Crack growth at 23°C (min/mm)⁴ | 43 | 65 | 98 | 121 | 36 |

| | | | | | |
|---|---|---|---|---|---|
| ¹Data obtained according to Automated Testing System instrument by the Instron Corporation which performs multiple tests in one operation. Such instrument may determine, for example, ultimate tensile, ultimate elongation, modulii, etc. Data reported in the Table is generated by running the ring tensile test station which is an Instron 4201 load frame. | | | | | |
| ²Data obtained according to DIN 53516 abrasion resistance test procedure using a Zwick drum abrasion unit, model 6102 with 10 Newtons force. The DIN abrasion results are reported as relative values, in terms of percentages, compared to a control rubber composition. Such DIN abrasion testing is well known to those having skill in such art. | | | | | |
| ³The fabric backed sample tear strength test is intended to provide a measure of tear strength, or resistance to tear, for a fabric backed rubber sample cured at a temperature of 160°C for 79 minutes. Samples of size 0.5 x 1 x 6 inches (1.27 x 2.54 x 15.24 cm) are cut along each of its 15.2 cm long edges to a depth of 0.25 inches (6.4 mm) and pulled apart by an Instron™ analytical instrument at a cross head speed of 500 mm/min (20 inches per minute). The resultant load values (tear strengths) are reported in terms of Newtons force. ASTM Test D-624-00 "Standard Test Method for Tear Strength of Conventional Vulcanized Rubber..." refers to a Type T (trouser) tear test and a Type CP (constrained path) tear test. For this test, the Sample configuration is patterned after the Type CP test and the pulling method is patterned after the Type T test. | | | | | |
| ⁴The crack growth test is measure of crack growth during dynamic continuous flexing without relaxation of the sample. The test is sometimes referred to as a DeMattia (Pierced Groove Flex Test). The crack growth of the sample is measured in inches per minute and converted to minutes per millimeter (min/mm) for this Example. The test is conducted with a DeMattia Flexing Machine at 23°C. The test samples, cured in a DeMattia mold, are of a width of 1.0 inches (2.54 cm) of a size 0.25 x1.0 x 6.0 inches (0.635 cm x 2.54 cm x 15.24 cm) with a 0.1875 inch (0.4763 cm) diameter half-cylinder groove molded in the center of the sample. The sample is punctured in the center of the groove with an ASTM piercing tool. The sample is flexed at a constant rate of about 300 +/- cycles per minute. The sample is subjected to a flexing action at the groove from a straight to doubled position. The flexing action induces a tear starting at the puncture and traveling laterally across the groove. Once cracking is detected, the time and crack length are recorded. For example, reference may be made to ASTM D813 except that here a DeMattia machine was used. | | | | | |

From Table 2 it is seen that Sample B which used the combination of soybean oil and starch/plasticizer composite, exhibited similar physical properties compared to those of Control Sample A (which did not contain soybean oil or starch/plasticizer composite).

From Table 2 it is seen that Sample C, used the same combination of soybean oil and starch/plasticizer composite as Sample B, but where the starch/plasticizer composite was added in the second non-productive mixing stage. Again, Sample B exhibited similar physical properties, including aged physical properties, as such properties of Control Sample A.

From Table 2, it is also seen that Sample D, which is the same as Sample C, but without the starch/plasticizer composite, exhibited lower rebound properties compared to those of Control Sample A. For a tread rubber composition, a higher rebound property is usually desirable where reduced rolling resistance is desired.

From Table 2 it is further seen that Sample E, which is the same as Sample C but without the soybean oil, that the elongation was lower. For a tread rubber composition, maintained elongation properties is usually desirable where damage resistance is desired.

Therefore, it is concluded that the combination of the starch/plasticizer composite and soybean oil provided the best match of the physical properties to the Control Sample A.

## Claims

1. A tire having a component being comprised of a rubber composition comprised of, based upon parts by weight per 100 parts by weight of elastomer (phr):
(A) at least one conjugated diene-based elastomer,
(B) from 3 to 20 phr of soybean oil,
(C) from 3 to 20 phr of starch/plasticizer composite having a starch/plasticizer weight ratio in a range of from 0.5/1 to 5/1,
(D) from 35 to 80 phr of carbon black and/or silica reinforcing filler, and
(E) a coupling agent for said starch/plasticizer composite, and silica if silica is used, having a moiety reactive with hydroxyl groups contained on said starch/plasticizer composite, and said silica if silica is used, and another moiety interactive with said conjugated diene-based elastomer(s).

2. The tire of claim 1, wherein said tire component is a tire tread, tire sidewall, tire innerliner, ply coat, wire coat, chafer, apex, sidewall insert and/or toe guard.

3. The tire of claim 2, wherein said tire is comprised of a retreaded carcass with said tire tread.

4. The tire of at least one of the preceding claims, wherein diene-based elastomer of said tire component is selected from at least one of cis 1,4-polyisoprene, cis 1,4-polybutadiene, trans 1,4-polybutadiene, styrene/butadiene polymers (organic solution polymerization derived and/or aqueous emulsion polymerization derived), vinyl polybutadiene having a vinyl content in a range of 30 to 90 percent, isoprene/butadiene polymers, styrene/isoprene polymers, styrene/isoprene/butadiene terpolymers and their mixtures.

5. The tire of at least one of the preceding claims, wherein at least one of said elastomers is an organic solvent solution prepared elastomers which is tin coupled and/or modified by containing terminal or pendant primary amines, secondary amines, heterocyclic amines, alkoxysilane groups and their mixtures.

6. The tire component of at least one of the preceding claims, wherein said starch of said starch/plasticizer composite is comprised of amylose units and amylopectin units, wherein said plasticizer is a poly(ethylene vinylalcohol) and wherein said starch/plasticizer composite has a softening point in a range of 110°C to 170°C.

7. The tire of at least one of the preceding claims, wherein said reinforcing filler is rubber reinforcing carbon black.

8. The tire of at least one of the preceding claims, wherein said reinforcing filler is a combination of rubber reinforcing carbon black and amorphous precipitated silica.

9. The tire of at least one of the preceding claims, wherein said coupling agent is a bis(3-triethoxysilylpropyl) polysulfide having an average of from 2 to 4 connecting sulfur atoms in its polylsulfidic bridge.

10. The tire of at least one of the preceding claims, wherein said reinforcing filler is
(1) from 35 to 80 phr of rubber reinforcing carbon black, or
(2) from 5 to 75 phr of rubber reinforcing carbon black, and 5 to 75 phr of synthetic amorphous silica, preferably precipitated silica, or
(3) from 35 to 80 phr of synthetic amorphous silica.
